Europäisches Patentamt

(19) European Patent Office

Office européen des brevets

(11) Publication number: **0 051 351**
**B1**

(12) **EUROPEAN PATENT SPECIFICATION**

(45) Date of publication of patent specification: **22.01.86**

(51) Int. Cl.⁴: **F 16 B 5/06, F 16 B 5/02**

(21) Application number: **81303478.2**

(22) Date of filing: **30.07.81**

(54) A panel joining system.

(30) Priority: **08.10.80 ES 253396**
**08.10.80 ES 253397**
**31.03.81 ES 257262**

(43) Date of publication of application:
**12.05.82 Bulletin 82/19**

(45) Publication of the grant of the patent:
**22.01.86 Bulletin 86/04**

(84) Designated Contracting States:
**AT BE CH DE FR GB IT LI LU NL SE**

(56) References cited:
**CH-A- 106 147**
**DD-A- 100 316**
**ES-A- 313 883**
**ES-A- 377 036**
**FR-A-1 495 105**
**FR-A-2 138 215**
**FR-A-2 155 602**
**FR-A-2 446 941**
**US-A-2 599 322**
**US-A-2 751 109**
**US-A-3 724 886**

(73) Proprietor: **PERFIL EN FRIO S.A.**
**Santa Engracia, 2**
**Pamplona (ES)**

(72) Inventor: **Larrea, Juan**
**Santa Engracia**
**E-2 Pamplona (ES)**

(74) Representative: **Jones, Andree Zena et al**
**E. N. Lewis & Taylor 144 New Walk**
**Leicester LE1 7JA (GB)**

Courier Press, Leamington Spa, England.

## Description

The present invention deals with a new panel joining system which is specifically applicable to prefabricated panels of the kind where two metal or plastic sheets are arranged parallel to one another, and the gap between them filled with a material to afford the panel heat and/or sound insulation properties, in addition to increasing its stiffness as a whole.

Spanish Patents Nos. 313,883 published 16th March 1966 and 377,036 published 16th April 1972 are concerned with panels of this type, where there are male or tongued panels and female or grooved panels. The joint between these panels, such as it is specified for example, in Spanish Patent No. 313,883, involves the need to use a joint cover but for the purposes of executing the joint, bulges are provided at right angles with respect to the surface of the panel along its outside edge, its inside edge, or both its edges together. These bulges are secured together using any kind of clip which will draw these bulges towards one another and simultaneously conceal the seal which must necessarily be made between them.

This arrangement entails an obvious waste of material and may even become an unsurmountable difficulty, rendering such panels unsuitable for the application in question when a smooth inside or outside surface is required.

U.S. Patent No. 3,724,886 also illustrates a panel joining arrangement which comprises panels having sheet metal covers with an infill, the panels ends being T-shaped to be received in clamping sections which are bolted together. The resulting joint is neither smooth nor adequately air-and-water-tight under adverse conditions.

Other attempts have also been made to achieve a joint between panels which is smooth on the outside face at least. These arrangements have not been successfully put into practice up to now, because in addition to the difficulties they involve for proper alignment, the joint so accomplished is not tight.

The panel joining system covered by this invention overcomes the disadvantages that at present exist, since it achieves absolute tightness at the join both on the outside and the inside or on the edges thereof, and therefore allows panels of this kind to be employed in all types of environment, including damp environments and locations that are subject to condensation.

The panel joining arrangement provided by the invention comprises a panel joining arrangement for panels, said panels being of the type which include a first and a second rigid sheet having an insulating fill therebetween, said panels having end portions to be joined the end portions being arranged flush with one another, said arrangement comprising;

a) the first rigid sheet of each of the two panels which sheet includes:

i) a first shaped section near one end of the first sheet, said shaped section being a first groove with respect to the exterior plane of the panel;

ii) a second shaped section, said second shaped section being a second groove arranged between the first shaped section and said one end of the sheet; and

iii) said one end of the first sheet including a flange perpendicular to the outer plane of the panel;

b) the second rigid sheet of each of the two panels which includes:

i) a first shaped section near one end of the sheet, said shaped section being a first groove with respect to the exterior plane of the panels; and

ii) the end of the sheet including a flange perpendicular to the plane of the panel;

c) a sealing device disposed at the end portion of each panel, said sealing device being sealingly situated between the flanges of the first and of the second rigid sheets, said sealing device, upon abutment with a corresponding sealing device of the panel to be joined, co-operates to provide a space between midportions of the sealing devices;

d) at least two resilient joint covers insertable into the corresponding first shaped sections of the first and of the second panels to be joined;

e) a load spreader plate for insertion into corresponding second shaped sections of the panels to be joined, said load spreader plate being operative for holding the panels in abutment; and

f) means for retaining said load spreader plate in position between the abutting panels for holding said panels.

In examples of the invention there are provided one or two load spreader plates as deemed necessary.

These load spreader plates are pressure assembled in the grooves which are concealed by the joint cover (inserted inside the grooves that are devised as water drainage channels), and carry the securing screws which also apply a compression force which tends to draw the panels to be joined towards one another in order to enhance the efficiency of the seal and avoid the passage of water, air, dampness or similar elements.

The surface of the panel that lies between the two grooves (the inner one belonging to the actual join, and the outer one carrying the joint cover and devised as a water drainage channel) may slightly set back with respect to the wall which is defined by the panel, so that when the joint cover is located in position, the outer surface thereof lies in perfect alignment with the two panels and provides solely two planer surfaces belonging respectively to the two faces of the panels.

If desired, these panels may be designed either with totally smooth surfaces, or provided with staggered trapezial gaps, with pressed holes, ornamental holes or similar, where these peculiarities have no effect other than to change the structural strength of the plates making up the panels, and in no way alter the essential features of the invention.

The joining system envisaged under the present invention includes panels of the kind described which, upon their end faces, possess a special shape which enables the join to be made between two of them when abutted as described. Such special shape on the sides allows seals to be inserted these preferably being made from neoprene, aluminium foil or plastic and which serve the dual purpose of holding the fill or insulation material in place between the two outside sheets while the panels are being manufactured, and to attain additional sealing properties at the sides to prevent any communication between this insulation or fill material and the outside of the panels, so as to avoid dampness.

In the drawings:—

Figure 1 is an elevational section of a practical construction of the panel joining system being dealt with here;

Figure 2 shows the same practical construction of the panel joining system as in Figure 1, except that here it is applied to panels having totally smooth faces.

Figure 3 is an elevational section view in exactly the same arrangement as above, but here the join as covered by the invention is symmetrical with respect to its horizontal axis, and hence sealed at both sides of the panels. This practical construction of the invention is particularly appropriate for use in humid environments since the inside of the panels cannot suffer any damage from dampness because said panels are totally sealed.

Figure 4 shows the same practical construction of the panel joining system as in Figure 3, except that here it is applied to panels having totally smooth faces.

Figure 5 is an elevation and plan view of the construction of a load spreader plate which embodies the constructions shown in Figures 1 and 3.

Figure 6 depicts an elevational section view of another practical construction of the joining system being dealt with here.

Figure 7 shows the same practical construction of the panel joining system as in Figure 6, except that here it is applied to panels having totally smooth faces.

Figure 8 shows an identical elevational view to that in Figure 6 of a similar construction, but here the joining system is applied to both faces so that there is a total seal with respect to the inside of the panels.

Figure 9 shows the same practical construction of the panel joining system as in Figure 8, except that here it is applied to panels having totally smooth faces.

Figure 10 is an elevation and a plan view of the load spreader plate which is included in the constructions illustrated in Figures 6 and 8.

Figure 11 illustrates a practical construction of the panel joining system covered by this invention, the panels being in identical arrangement to that shown in Figure 6, but the load spreader plate possesses a different shape where the join in this case can be accomplished with the same degree of efficiency, but with a single coupling screw only.

Figure 12 shows the same practical construction of the panel joining system as in Figure 11, except that here it is applied to panels having totally smooth faces.

Figure 13 illustrates a further practical construction of the panel joining system as covered by the present invention where a further screw is applied with the facility of including a nut, although on symmetrical shaped panels only.

Figure 14 shows the same practical construction of the panel joining system as in Figure 13, except that here it is applied to panels having totally smooth faces.

Figure 15 depicts an elevation and plan view of the load spreader plate as required in the practical constructions illustrated in Figures 11 and 13.

Figure 16 illustrates a cross section view of a practical construction of the present invention as applied to panels fitted with stiffener ribs upon one of the side sheets that comprise them only. Side sealing between these panels is ensured in the case illustrated here, by a different structuring of the side seals themselves (neoprene, aluminium foil or similar).

Figure 17 shows a cross section view of a practical construction of the panel joining system as covered by the invention, applied here to panels whose side sheets are smooth and the shapes for accomplishing the join are present on the sheets belonging to one face only.

It is to be noted that all the practical constructions illustrated are liable to be applied to all kinds of prefabricated panels with the sole requirement that the shapes shown in the drawings (or others which do not substantially alter the technical features afforded by the constructions) must be provided along their edges (or machined thereon in a subsequent stage).

The panel joining system as dealt with by this invention is for panels which are comprised of two sheets (5, 6) between which an in-fill material (1) is inserted.

According to the conditions of use, then, in addition to these panels to be joined, at least one load spreader plate (2) secured to both panels to be joined, and at least one means of fastening (3) (generally a screw) are required.

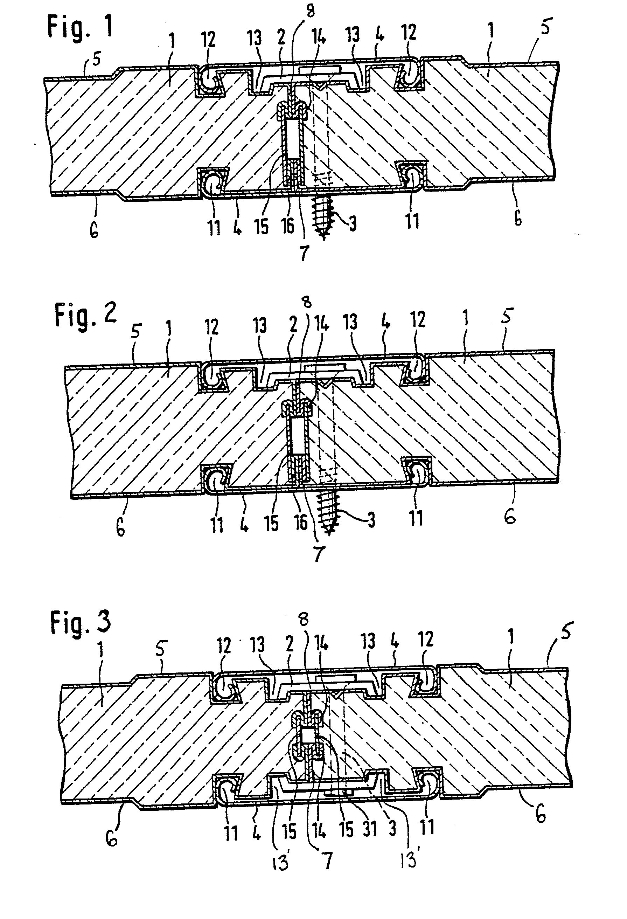

In the practical construction illustrated in Figures 1 and 2, panels to be joined are symmetrical with respect to a perpendicular axis thereto, and their outer sheets between which the fill material is inserted have open trapezial grooves.

Each one of said sheets (6) possesses an inverted "U" shaped groove (11) on one of its faces, where the arm closest to the end of the panel is slightly sloped and on the opposite face it possesses two successive grooves (12 and 13). Groove (12) has the same shape as groove (11) on the opposite face, while the lower side of groove (13) defines an inside flat with respect to the panels when same are assembled together.

Likewise, the flat defined from grooves (11) towards the edge of each panel and the flat defined between the two grooves (12 and 13) on the opposite face, are slightly set back with respect to the general plane of the panels.

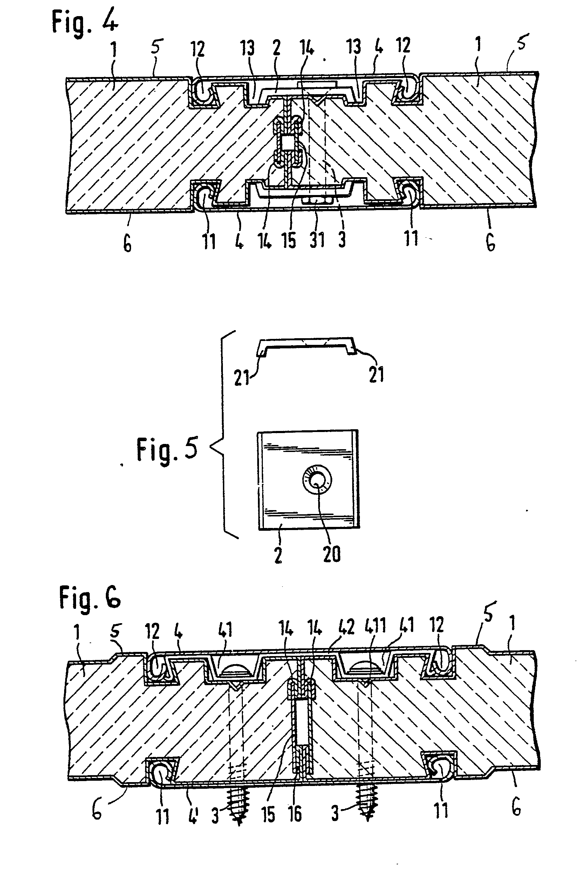

The load spreader plate (2) is generally "U" shaped in this practical construction of the invention as may be appreciated from Figure 5 in the drawings, and its flanges (21) are slightly divergent, while a hole (20) is provided in its web.

In this practical construction, when both panels are arranged side by side, the load spreader plate (2) is inserted so that each one of its flanges on the sloping side of groove (13) so as to tend to draw the panels towards one another. The present practical construction of the system being dealt with is completed by inserting a fastening means (screw) (3) into the hole (20) provided in plate (2), in such a way that this screw (3) goes through side plate (2) and one of the panels and emerges at the other side, where it will terminate on the appropriate section, frame or structure upon which the panels are assembled with this joining system.

The assembly is completed in this practical construction thereof, with two joint covers (4) which, being arranged upon either side of the panels as mentioned, are inserted by pressing into the appropriate pairs of grooves (11 and 12), and the web of each such joint lies in perfect alignment with the general side plane of the assembled panels so as to provide perfect continuity over the join.

Insofar as the end, having a flange (7, 8), of each rigid sheet is concerned, this forms à "U" shape (14) and a fold (16) between which a seal (15) made. of neoprene, aluminium foil or similar is held. Said seal (15) is subsequently positioned due to the effect of the panels being formed, and in any case, affords perfect tightness.

The practical construction illustrated in Figures 3 and 4 is wholly identical to that shown in Figures 1 and 2 respectively, but here in this case, each one of the panels is provided with two grooves (12, 13 and 11, 13') at the sides and shaped in the same way as has been explained above for practical constructions described there. Accordingly, this practical construction of the system that is illustrated in Figures 3 and 4 requires two load spreader plates (2) to be mounted upon each pair of grooves (13, 13').

In this practical construction, the screw (3) does not protrude with respect to the panels on the opposite side and a nut (31) may be applied in order to compress one of the plates (2).

Assembly of the joint seal (15) is performed in this case on two pairs of "U" shapes (14) facing one another symmetrically with respect to the longitudinal axis of each panel.

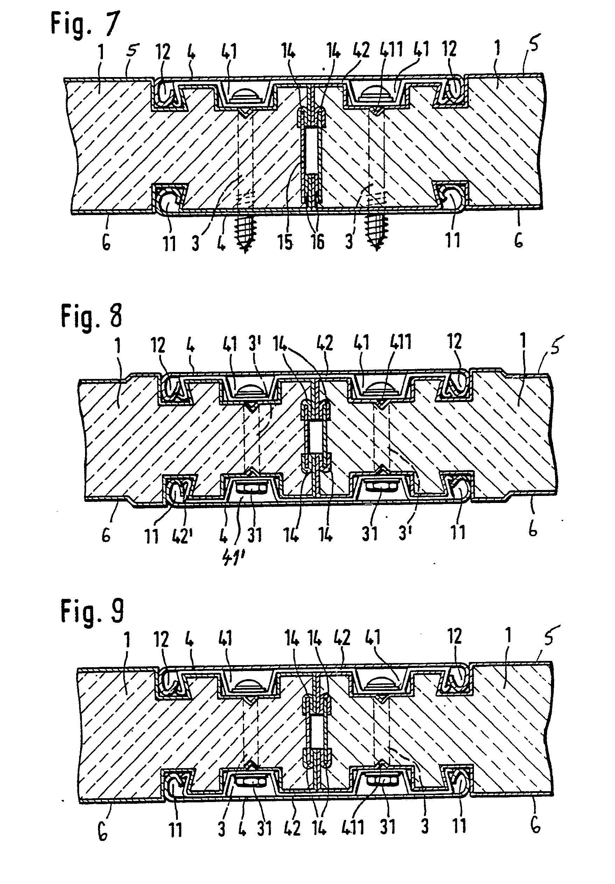

In accordance with the practical construction illustrated in Figures 6 and 7 the two panels to be joined define on one face, a groove (11) set back as a "U", but one of whose sides is not parallel to the other, where one portion of the rigid sheet lying between this groove and the edge of the panel is slightly set back with respect to the rest of the panel in this end area, to a height that coincides exactly with the thickness of the joint cover (4) which is included on this face, so that once the joint has been made and this joint cover (4) inserted in the outside plane thereof, it lies flush with the panel in this end area (at the rear, the panel possesses a number of open and/or stiffened trapezial insets). The adjacent panel to be joined on possesses the same shape on this face so that the join thereupon is wholly symmetrical with respect to the centre axis defining the panels as they are joined together.

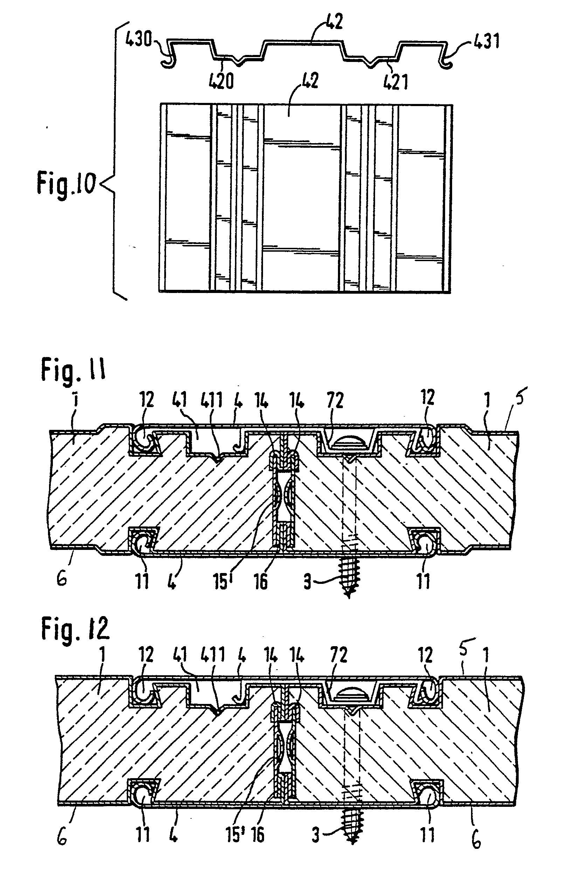

On the other face, each panel possesses two successive grooves, of which a first groove (12) is identical to that (11) described above, and identical as well to that made in the aforegoing practical constructions, and a second groove (41) in a "U" section with straight sides and a slight inset (411) having a vee section in the centre of its bottom. The height of the portions lying between the two grooves (12 and 41) and between each groove (41) and the corresponding end of the panel are such as to lie flush with one another, and be set back from the general outer plane of the panel by such an amount as to coincide exactly with the width taken up by the joint cover (4) embodied in this area, and the load spreader plate (42) which is likewise embodied in this practical construction, and engages with the two grooves (41) and the two grooves (12) (for which purpose it possesses the required geometrical shape as may be seen in Figures 6 and 10, where the latter show both an elevation as well as a plan view).

The join between the panels in this practical construction, once same have been longitudinally positioned with respect to one another, takes place upon inserting the load spreader plate (42) from one side so that the two insets (420 and 421) it possesses become inserted in the respective grooves (41) on the two panels, and the crooked ends (430 and 431) embrace the sloping side of each groove (12) in the direction whereby the two panels are drawn towards one another. Respective screws (3), which go through plate (42) and each panel in the corresponding area, secure the join. These screws (3) protrude from the opposite side of the panel, and are anchored by insertion into a secure location.

The side seal in ensured, as in the case of the practical construction depicted in Figure 1, with two "U" shaped sections (14) and folds (16) between each of which, a seal (15) of neoprene or aluminium foil or similar is placed.

The practical construction of the present invention illustrated in Figures 8 and 9 corresponds to the constructions shown in Figures 6 and 7 respectively, but with the join on both sides made in such a way that each panel has, on the face opposite to that where successive grooves (12 and 41) are located, two pairs of grooves (11 and 41') in symmetrical correspondence with respect to the longitudinal axis of the panels. By inserting a load spreader plate (42'), identical to the aforementioned one (42), into this second face, and by affording screws (3') the possibility of having a nut (31) applied thereto, the continuity between the panels is ensured without any need for a stationary structure to secure them.

The practical construction shown in Figures 11 and 12 is basically similar to that illustrated in Figures 6 and 7 respectively, where each panel has a groove (11) on one side and on the other, two pairs of grooves (12 and 41) of which the latter possesses a "vee" shaped inset (411) in the middle. As with the construction illustrated in Figures 6 and 7, the length on each panel lying between the groove (11) and the edge of the panel is set back with respect to the outermost plane of said panel by an amount which is equal to the thickness of the joint cover (4), whilst those portions lying between the grooves (12 and 41) and between this latter (41) and the edge of the panel are set back with respect to the general plane thereof by an amount that is equal to the sum of the thickness of the joint cover (4) and the load spreader plate (72), so that with this practical construction of the joining system, perfect continuity is ensured on both faces once the join has been accomplished.

The load spreader plate (72) possesses in this case a single "U" section (721) with open sides, whilst its two ends (730 and 731) are set respectively at right angles and obliquely to the body of said plate (72) and have an inward facing rim. By virtue of this shape, said plate (72) is pressure inserted so that its inset (721) lies inside one of grooves (41) as defined by one of the panels, whilst its shaped ends (730 and 731) embrace respectively the straight side as defined by one of the grooves (41) on the other panel and the sloping side as defined by the other groove (12) on the panel itself into whose groove (41), shape (721) is inserted.

The join in this case is completed with a single screw (3) which goes through plate (72) and one of the panels and then into a firm structure to secure it.

Tightness of the seals between the sides of panels is ensured in this practical construction by two "U" shapes (14) and folds (16) which are identical to those in constructions specified above, and in this case a different kind of seal (15') is used for exactly the same purpose.

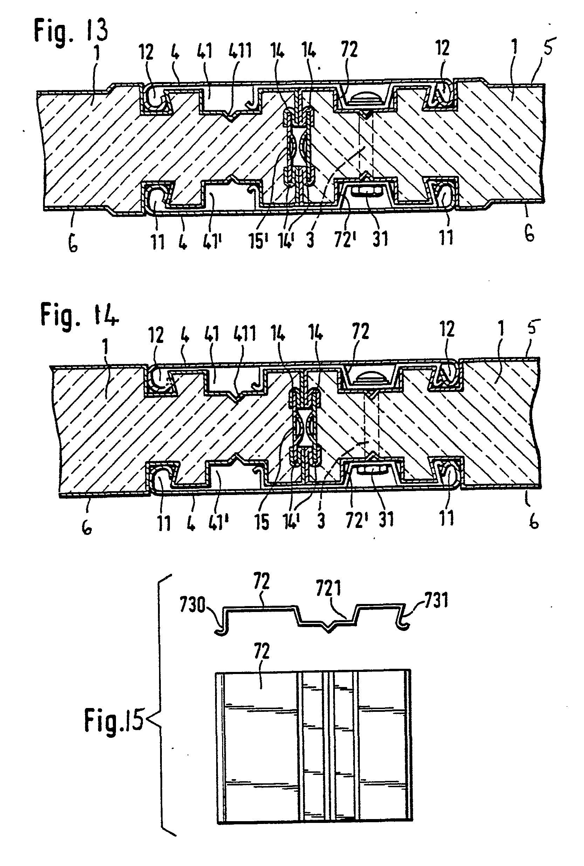

The practical construction of the joining systems between panels as illustrated in Figures 13 and 14 is essentially similar to the constructions shown in Figures 11 and 12, except that in the present case, the panels each define a symmetrical shape with a twin pair of grooves (12, 41 and 11, 41') on its two faces. In this case, it is necessary to include a second plate (72') on the other face, having an identical assembly to that described for plate (72) in the practical construction shown in Figures 11 and 12. In this case, screw (3) must be of the kind described in the constructions that are shown in Figures 3 and 8, and therefore, capable of taking the nut (31) so that load spreader plates (72 and 72') are pressed together and both panels are also pressed together so as to make a continuous join.

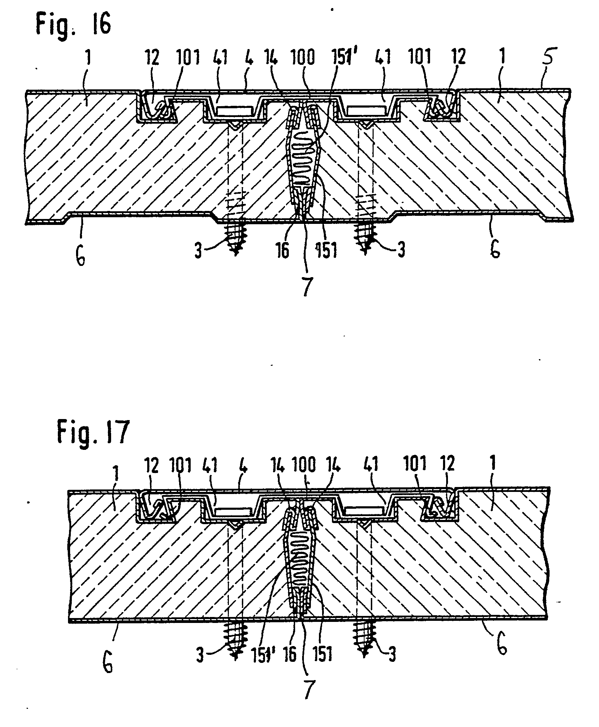

The practical construction shown in Figure 16 is essentially similar to that illustrated in Figures 6 and 8, with the following specific connotations:—

This practical construction is applicable for panels having one smooth face and the other covered with spaced trapezial insets. Said panels of this kind possess no specific shape or form upon one of their faces, while on the other they possess successive insets, where grooves (12) are identical to those denoted with this number in all the preceding descriptions of constructions, and where grooves (41) are identical to those denoted with this number in the constructions shown in Figures 6, 8, 11 and 13.

Joint cover (4) is shaped so as to have sharp edges or at least sharper edges than those in the preceding constructions. One of these edges abuts at an acute angle with the edge that is set most towards the inside of the straight side of each groove (12), and it provides a support point at each of its three corners, where said support points are located respectively in the aforementioned area, at the bottom of groove (12), and at the load spreader plate (100).

This load spreader plate offers its two sloping ends towards the inside in the same way as does plate (42) shown in Figure 10, going on to form a final bend (101), which also lies upon the edge of each groove (12) so as in this way to exert pressure over a wide area and provide improved securing.

"U" shaped members (14) and folds (16) in preceding constructions embody a seal (151) of identical material, and between two such seals of this kind, a fill material (151') is inserted for the purpose of ensuring even further the tightness at this area.

Screws (3) may have different shaped heads in order to provide greater working space for assembling these panels and this kind of join in accordance with the system being dealt with.

The practical construction shown in Figure 17 is substantially the same as the practical construction in Figure 16, except that it comprises panels whose faces are totally flat, so that there is no more than a single outside plane at all points, both on the panel as well as the join.

Finally, it must be stated that as is obvious, the constructions shown in Figures 16, and 17 may be assembled in a totally symmetrical fashion as are those in Figures 3, 8 and 13, it also being necessary to note that all the practical constructions of this invention are shown purely by way of examples.

The aforegoing detailed descriptive specification explains a number of practical constructions, all of which are made in accordance with the joining system which is the purpose of this invention. Reference is made in said descriptive specification to the attached drawings where said practical constructions are illustrated and these are in no way limitative and may therefore be subjected to those minor alterations which do not alter, depart from or modify the essential features, or remove the purpose herefrom.

## Claims

1. A panel joining arrangement for panels, said panels being of the type which include first (5) and second (6) rigid sheet having an insulating fill material (1) therebetween, said panels having end portions to be joined, the end portions being arranged flush with one another, said arrangement comprising;

a) the first rigid sheet (5) of each of the two panels which sheet includes:

i) a first shaped section (12) near one end of the sheet (5), said shaped section being a first groove with respect to the exterior plane of the panel;

ii) a second shaped section (13, 41), said second shaped section being a second groove arranged between the first shaped section and said one end of the sheet; and

iii) said one end of the sheet (5) including a flange (8) perpendicular to the exterior plane of the panel;

b) the second rigid sheet (6) of each of the two panels which includes:

i) a first shaped section (11) near one end of the sheet, said shaped section being a first groove with respect to the exterior plane of the panel; and

ii) the end of the sheet including a flange (7) perpendicular to the exterior plane of the panel;

c) a sealing device (15, 151) disposed at the end portion of each panel, said sealing device sealingly situated between the flanges (7, 8) of the first and of the second rigid sheets, said sealing device, upon abutment with a corresponding sealing device of the panel to be joined, cooperates to provide a space between midportions of the sealing devices;

d) at least two resilient joint covers (4) insertable into the corresponding first shaped sections of the first and of the second panels to be joined;

e) a load spreader plate (2, 42, 72, 100) for insertion into corresponding second shaped sections of the panels to be joined, said load spreader plate being operative for holding the panels in abutment; and

f) means (3) for retaining said load spreader plate in position between the abutting panels for holding said panels.

2. The arrangement of claim 1 wherein the exterior surface between said first shaped sections (12) of the first rigid sheet (5) is set back to receive the resilient joint cover (4) and load spreader plate (2, 42, 72, 100) so that an exterior surface of the resilient joint cover (4) is substantially continuous with the external plane of the panel.

3. The arrangement of claim 1 wherein the grooves comprising said first shaped sections (11) are U-shaped and have one arm of the U of different height than the other, the shorter leaning inwards of the groove so that the opening is narrower than the base.

4. The arrangement of claim 1 wherein the means (3) for retaining is a screw extending through a hole (20) in said load spreader plate.

5. The arrangement of claim 1, wherein the said rigid sheet (6) further includes:

i) a second shaped section (13', 41'), said second shaped section being a second groove arranged between the first shaped section (11) and said one end of the second sheet; there being also provided a second load spreader plate (2, 42', 72') adapted to be received in the second shaped section (13', 41') of the second rigid sheet of the panels.

6. The arrangement of claim 5, wherein the means (3) for retaining is a nut (31) and a bolt extending through the two load spreader plates disposed on the first and second side sheets (5, 6) of the panels.

7. The arrangement of either claims 1 and 5 wherein the or each load spreader plate (42, 72, 100) is U-shaped, flanges (420, 421, 730, 721) of said U-shape being adapted for fitting into the corresponding second shaped sections (41) of said sheets, said load spreader plate extending to terminate in a bend (430, 431, 731, 101) operative to be pressingly engaged in the first shaped sections (11, 12) of the sheets whereby the panels are drawn toward one another.

8. The arrangement of either of claims 1 and 5 wherein the load spreader plate (2) is a U-shape, having a flange (21) at one end portion for fitting into one of said second shaped sections (13) of corresponding abutting panels and a flange (21) at the other end of the load spreader plate terminates in a bend operative for pressingly engaging the other of said second shaped sections whereby the panels are drawn toward one another.

9. The arrangement of any one of the preceding claims further comprising an insulating fill (15') in the space between midportions of said seals when said panels are joined.

## Revendications

1. Un dispositif de jointoiement de panneaux pour panneaux, lesdits panneaux étant du type qui inclue un première feuille rigide (5) et une deuxième feuille rigide (6) comportant entre elles un matériau de garnissage isolant (7), lesdits panneaux ayant des parties d'extrémité devant être jointées, les partes d'extrémité étant prévues affleurantes l'une par rapport à l'autre, ledit dispositif comprenant:

a) la première feuille rigide (5) de chacun des deux panneaux, laquelle feuille inclue:

i) une première section profilée (12) adjacente à une extrémité de la feuille (5), ladite section profilée étant une première gorge par rapport au plan extérieur du panneau;

ii) une deuxiéme section profilée (13, 41), ladite deuxième section profilée étant une deuxième gorge prévue entre la première section profilée et ladite une extrémité de la feuille;

iii) ladite une extrémité de la feuille (5) incluant un rebord (8) qui est perpendiculaire par rapport au plan extérieur du panneau;

b) la deuxième feuille rigide (6) de chacun des deux panneaux, laquelle feuille inclue:

i) une première section profilée (11) adjacente à une extrémité de la feuille, ladite section profilée étant une première gorge par rapport au plan extérieur du panneau; et

ii) l'extrémité de la feuille incluant un rebord (7) perpendiculaire par rapport au plan extérieur du panneau;

c) un système de joint (15, 151) disposé à la partie d'extrémité de chaque panneau, ledit système de joint étant situé joignant entre les rebords (7, 8) de la première et de la deuxième feuilles rigides, ledit système de joint, sur arc-boutement avec un système de joint correspondant du panneau à jointer, collaborant de manière à créer un espace entre des parties médianes des systèmes de joints;

d) au moins deux couvre-joints élastiquement résistants (4) insérables dans les premières sections profilées correspondantes du premier panneau et du deuxième panneau à jointer;

e) une plaque d'étalement de charge (2, 42, 72, 100) pour insertion dans des deuxièmes sections profilées correspondantes des panneaux à jointer, ladite plaque d'étalement de charge agissant de façon à maintenir les panneaux arc-boutés; et

f) des moyens (3) pour retenir la dite plaque d'étalement de charge en position entre les panneaux arc-boutés pour le maintien desdits panneaux.

2. Dispositif selon la revendication 1, caractérisé en ce que la surface extérieure entre lesdites premières sections. profilées (12) de la première feuille rigide (5) est en retrait pour recevoir le couvre-joint élastique résistant (4) et la plaque d'étalement de charge (2, 42, 72, 100) de manière qu'une surface extérieure du couvre-joint élastique résistant (4) soit rigoureusement continue avec le plan extérieur du panneau.

3. Dispositif selon la revendication 1, caractérisé en ce que les gorges constituant lesdites premières sections profilées (11) sont profilées en forme d'U avec une jambe de l'U ayant une hauteur différente de la hauteur de l'autre jambe, la jamble la plus courte s'inclinant vers l'intérieur de la gorge de façon que l'ouverture soit plus étroite que la base.

4. Dispositif selon la revendication 1, caractérisé en ce que les moyens de retenue (3) sont constitués par une vis passant dans un trou (20) dans ladite plaque d'étalement de charge.

5. Dispositif selon la revendication 1, caractérisé en ce que la deuxième feuille rigide (6) inclue en outre:

i) une deuxième section profilée (13', 41'), ladite deuxième section profilée étant deuxième gorge-disposée entre la première section profilée (11) et ladite une extrémité de la deuxième feuille, une deuxième plaque d'étalement de charge (2, 42', 72') étant également prévue et adaptée pour être reçue dans la deuxième section profilée (13', 41') de la deuxième feuille rigide des panneaux.

6. Dispositif selon la revendication 5, caractérisé en ce que les moyens de retenue (3) sont constitués par un écrou (31) et par un boulon traversant les deux plaques d'étalement de charge disposées sur la première et la deuxième feuilles latérales (5, 6) des panneaux.

7. Dispositif selon l'une des revendications 1 ou 5, caractérisé en ce que la plaque d'étalement de charge ou chaque plaque d'étalement de charge (42, 72, 100) est profilée en forme d' U, des rebords (420, 421, 730, 721) dudit profil en U étant prévus pour s'ajuster dans les deuxièmes sections profilées correspondantes (41) des dites feuilles, ladite plaque d'étalement de charge s'étendant de façon à se terminer en un coude (436, 431, 731, 100) agissant de manière à s'engager par pression dans les premières sections profilées (11, 12) des feuilles, les panneaux étant ainsi attirés l'un vers l'autre.

8. Dispositif selon l'une des revendications 1 ou 5, caractérisé en ce que la plaque d'étalement de charge (2) est un profil en U comportant un rebord (21) à une extrémité pour ajustement dans une desdites deuxièmes sections profilées (13) de panneaux arc-boutés correspondants, un rebord (21) à l'autre extrémité de la plaque d'étalement de charge se terminant en un coude agissant de manière à s'engager par pression avec l'autre desdites deuxièmes sections profilées, les panneaux étant ainsi attirés l'un vers l'autre.

9. Dispositif selon l'une quelconque des revendications précédentes, caractérisé en ce qu'il comprend en outre un garnissage isolant (151') dans l'espace entre des parties médianes desdits joints lorsque lesdits panneaux sont jointés.

**Patentansprüche**

1. Plattenverbindung für solche Platten, die eine erste (5) und eine zweite (6) starre Lage aufweisen, zwischen denen sich ein isolierendes Füllmaterial (1) befindet, und die miteinander zu verbindende Endabschnitte aufweisen, die bündig zueinander angeordnet sind, dadurch gekennzeichnet, daß

a) die erste starre Lage (5) einer jeden Platte umfaßt:

i. einen ersten geformten Abschnitt (12) in der Nähe von einem Ende der Lage (5), der relativ zur Außenfläche der Platte eine erste Nut darstellt;

ii. einen zweiten geformten Abschnitt (13, 41), der eine zwischen dem ersten geformten Abschnitt und dem einen Ende der Lage angeordnete zweite Nut darstellt; und

iii. wobei das eine Ende der Lage (5) einen Flansch (8) aufweist, der senkrecht zur Außenfläche der Platte verläuft;

b) die zweite starre Lage (6) einer jeden Platte umfaßt:

i. einen ersten geformten Abschnitt (11) in der Nähe eines Endes der Lage, der relativ zur Außenfläche der Platte eine erste Nut darstellt; und

ii. wobei das Ende der Lage einen Flansch (7) umfaßt, der senkrecht zur Außenfläche der Platte verläuft;

c) eine Dichtungsvorrichtung (15, 151) am Endabschnitt einer jeden Platte angeordnet ist, die dichtend zwischen den Flanschen (7, 8) der ersten und zweiten starren Lage vorgesehen ist und die dadurch, daß sie an eine entsprechende Dichtungsvorrichtung der zu verbindenden Platte stößt, die Bildung eines Raumes zwischen mittleren Abschnitten der Dichtungsvorrichtungen bewirkt;

d) mindestens zwei elastische Verbindungsabdeckungen (4) in die entsprechenden ersten geformten Abschnitte der ersten und zweiten, miteinander zu verbindenden Platte einsetzbar sind;

e) sie eine Lastverteilerplatte (2, 42, 72, 100) zum Einsetzen in entsprechende zweite geformte Abschnitte der miteinander zu verbindenden Platten aufweist, die die Platten im aneinanderstoßenden Zustand hält; und

f) sie Einrichtungen (3) zum Halten der Lastverteilerplatte zwischen den aneinanderstoßenden Platten aufweist, um letztere zu haltern.

2. Plattenverbindung nach Anspruch 1, dadurch gekennzeichnet, daß die Außenfläche zwischen den ersten geformten Abschnitten (12) der ersten starren Lage (5) zurückversetzt ist, um die elastische Verbindungsabdeckung (4) und die Lastverteilerplatte (2, 42, 72, 100) aufzunehmen, derart, daß die Außenfläche der elastischen Verbindungsabdeckung (4) mit der Außenfläche der Platte im wesentlichen kontinuierlich verläuft.

3. Plattenverbindung nach Anspruch 1, dadurch gekennzeichnet, daß die Nuten, die die ersten geformten Abschnitte (11) umfassen, U-förmig ausgebildet sind, wobei ein Arm des U eine andere Höhe aufweist als der andere Arm und wobei der Kürzere Arm nach innen in die Nut geneigt ist, so daß die Öffnung der Nut enger ist als deren Basis.

4. Plattenverbindung nach Anspruch 1, dadurch gekennzeichnet, daß die Einrichtungen (3) zum Halten durch eine Schraube gebildet werden, die sich durch ein Loch (20) in der Lastverteilerplatte erstreckt.

5. Plattenverbindung nach Anspruch 1, dadurch gekennzeichnet, daß die zweite starre Lage (6) desweiteren umfaßt:

i. einen zweiten geformten Abschnitt (13', 41'), bei dem es sich um eine zweite Nut handelt, die zwischen dem ersten geformten Abschnitt (11) und dem einen Ende der zweiten Lange angeordnet ist, und daß desweiteren eine zweite Lastverteilerplatte (2, 42', 72') vorgesehen ist, die im zweiten geformten Abschnitt (13', 41') der zweiten starren Lage der Platten aufgenommen werden kann.

6. Plattenverbindung nach Anspruch 5, dadurch gekennzeichnet, daß die Einrichtungen (3) zum Halten durch eine Mutter (31) und einen Bolzen, der sich durch die beiden Lastverteilerplatten erstreckt, die an der ersten und zweiten seitlichen Lage (5, 6) der Platten vorgesehen sind, gebildet sind.

7. Plattenverbindung nach einem der Ansprüche 1 und 5, dadurch gekennzeichnet, daß die Lastverteilerplatte (42, 72, 100) oder jede Lastverteilerplatte eine U-förmige Gestalt besitzt, wobei Flansche (420, 421, 730, 721) dieser U-Form in die entsprechenden zweiten geformten Abschnitte (41) dieser Lagen einpaßbar sind, und daß die Lastverteilerplatte in einer Krümmung (430, 431, 731, 101) endet, die unter Druck in die ersten geformten Abschnitte (11, 12) der Lagen eingreifen kann, wodurch die Platten gegeneinander gezogen werden.

8. Plattenverbindung nach einem der Ansprüche 1 und 5, dadurch gekennzeichnet, daß die Lastverteilerplatte (2) eine U-Form besitzt und einen Flansch (21) an einem Endabschnitt aufweist, der in einen der zweiten geformten Abschnitte (13) der entsprechenden aneinanderstoßenden Platten einpaßbar ist, und daß ein Flansch (21) am anderen Ende der Lastverteilerplatte in einer Krümmung endet, die mit dem anderen der zweiten geformten Abschnitte unter Druck in Eingriff bringbar ist, wodurch die Platten gegeneinander gezogen werden.

9. Plattenverbindung nach einem der vorangehenden Ansprüche, dadurch gekennzeichnet, daß sie desweiteren eine Isolationsfüllung (151') in dem Raum zwischen den Mittelabschnitten der Dichtungen aufweist, wenn die Platten miteinander verbunden sind.

Fig. 1

Fig. 2

Fig. 3

Fig. 4

1  5  12  13  2  14  13  4  12  1  5

6  11  4  14  15  31  3  11  6

Fig. 5

21  21

2  20

Fig. 6

1  5  12  4  41  14  14  42  411  41  12  5  1

6  11  4  3  15  16  3  11  6

0 051 351

**Fig. 7**

**Fig. 8**

**Fig. 9**

3

Fig.10

Fig. 11

Fig. 12

Fig. 13

Fig. 14

Fig. 15

Fig. 16

Fig. 17